(19) Europäisches Patentamt
European Patent Office
Office européen des brevets

(11) Veröffentlichungsnummer: **0 011 751**
**B1**

(12) # EUROPÄISCHE PATENTSCHRIFT

(45) Veröffentlichungstag der Patentschrift: **14.03.84**

(51) Int. Cl.³: **C 08 G 18/14**, C 08 K 3/00, C 08 K 5/00

(21) Anmeldenummer: **79104409.2**

(22) Anmeldetag: **09.11.79**

(54) **Verfahren zur Herstellung von verstärkten geschäumten Kunststoffen.**

(30) Priorität: **22.11.78 DE 2850610**

(43) Veröffentlichungstag der Anmeldung: **11.06.80 Patentblatt 80/12**

(45) Bekanntmachung des Hinweises auf die Patenterteilung: **14.03.84 Patentblatt 84/11**

(84) Benannte Vertragsstaaten: **BE DE FR GB IT NL SE**

(56) Entgegenhaltungen:
**DE - A - 2 457 727**
**DE - A - 2 654 746**
**GB - A - 1 497 692**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Marx, Matthias, Dr. Dipl.-Chem., Seebacher Strasse 49, D-6702 Bad Duerkheim 1 (DE)**
Erfinder: **Nissen, Dietmar, Dr. Dipl.-Chem., Ziegelhaeuser Landstrasse 31, D-6900 Heidelberg (DE)**
Erfinder: **Jarre, Wolfgang, Dr. Dipl.-Chem., Limesstrasse 3, D-6700 Ludwigshafen (DE)**

**EP 0 011 751 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von verstärkten geschäumten Kunststoffen

Die Erfindung betrifft ein Verfahren zur Herstellung von verstärkten, geschäumten Kunststoffen auf Basis von organischen Polyisocyanaten und Polyolen in Gegenwart von Füllstoff-Dispersionen, die durch in situ Zerkleinerung auf Teilchengrößen kleiner als 7 µm von organischen und/oder anorganischen Füllstoffen in Polyisocyanaten oder Polyolen hergestellt werden.

Es ist bekannt, Polyurethan-Kunststoffe mit verschiedenartigen physikalischen Eigenschaften dadurch herzustellen, daß man Verbindungen mit mehreren aktiven Wasserstoffatomen, insbesondere Polyhydroxyverbindungen, mit Polyisocyanaten, gegebenenfalls unter Mitverwendung von Polymeren als Verstärkungsmitteln, Kettenverlängerungsmitteln, Vernetzungsmitteln, Treibmitteln, Aktivatoren, Emulgatoren und anderen Zusatzstoffen umsetzt. Bei geeigneter Wahl der Komponenten lassen sich auf diese Weise sowohl elastische als auch starre Schaumstoffe, Lackierungen, Imprägnierungen, Beschichtungen oder Elastomere herstellen.

Für viele Anwendungsgebiete spielt bei der Herstellung von Polyurethankunststoffen die Viskosität der verwendeten Polymer-Polyol-Gemische eine wesentliche Rolle. Das gilt besonders für die Herstellung von Polyurethanschaumstoffen, bei der sich die Polymer-Polyol-Mischung einwandfrei über Pumpen fördern und dosieren sowie in Mischkammern homogen und möglichst schnell mit der Isocyanatkomponente sowie den Zusatzmitteln wie Aktivatoren, Emulgatoren, Wasser und/oder Treibmitteln vermischen lassen müssen. Aus diesem Grunde sind bei der Herstellung von Polyurethanschaumstoffen möglichst niedrige Viskositäten erwünscht.

Durch schlechte Vermischung der Reaktanten bei der Polyurethanherstellung infolge von hohen Viskositäten treten Inhomogenitäten bzw. Schaumstörungen mit allen Nachteilen für die Qualität der Produkte auf.

Es ist weiterhin bekannt, daß durch Zusatz von Polymerisaten, die mit Isocyanaten reagierende Gruppen enthalten, die Tragfähigkeit von flexiblen Polyurethanschäumen niederer Dichte erhöht werden kann (US-PS 35 23 093). Nachteilig an dem beschriebenen Verfahren ist zunächst, daß die als Füllstoffe geeigneten Polymeren in Gegenwart von monofunktionellen aktive Wasserstoffatome aufweisenden organischen Lösungsmitteln, nämlich Alkoholen und Mercaptanen polymerisiert werden müssen. Verfährt man analog den Angaben dieser Publikation und verwendet die dort beschriebenen spröden Polymerisat-Pulver als Füllstoffe, dann steigt bei höheren Konzentrationen des Polymerisats in der Polyhydroxyverbindung die Viskosität der Mischung derart stark an, daß die Mischung technisch schwer zu handhaben ist, da sie nicht mehr frei fließt. Da die Polymerisat-Pulver relativ rasch sedimentieren, sind die Dispersionen ferner nicht lagerstabil.

Dieser US-PS ist außerdem zu entnehmen, daß die darin beschriebenen Polymerisate nicht mehr verwendet werden können, wenn ein gewisses Molekulargewicht überschritten wird, da dann die Viskosität der Polymer-Polyol-Abmischung so hoch wird, daß eine Verwendung zur Polyurethanherstellung nicht mehr möglich ist.

Hochviskose Polymer-Polyol-Mischungen sind für die Verarbeitung z. B. auf Hochdruck-Schaummaschinen, nicht mehr ohne weiteres brauchbar.

Nach Angaben der US-PS 38 69 413 werden flexible Polyurethanschaumstoffe aus Polyisocyanaten und einem Polyätherpolyol hergestellt, welches ein Polymer in Latexform mit einer Teilchengröße von 0,1 µm bis 1 µm in einer Menge von 2 bis 50 Gewichtsprozent, bezogen auf die Polymer-Polyol-Abmischung enthält und wobei das Polymere erhalten wird durch Polymerisation von einem oder mehreren ähtylenisch ungesättigten Monomeren, die frei sind von Gruppen, die mit Isocyanat- oder Hydroxylgruppen unter Urethanbildungsbedingungen reagieren können. Nachteilig an diesem Verfahren ist, daß die mechanischen Eigenschaften, insbesondere die Zugfestigkeit, der auf diese Art hergestellten Weichschaumstoffe unbefriedigend ist. Ferner sind die Feststoffgehalte der wässerigen Polymerdispersion, insbesondere bei Styrol-Acrylnitril-Copolymerisaten mit großem Acrylnitrilgehalt, äußerst gering, so daß hohe Verfahrenskosten mit der Entwässerung verbunden sind.

Bekannt sind ferner Dispersionen von Copolymeren, vorzugsweise Styrol-Acrylnitril-Copolymeren in Hydroxylgruppen aufweisenden Polyäthern (deutsche Patentschriften 1 222 669, 1 152 536 und 1 152 537). Werden die Vinylmonomeren direkt in den Polyolen copolymerisiert, so sind die erhaltenen Teilchen im allgemeinen so klein, daß keine Neigung zur Sedimentation besteht. Nachteilig bei diesen Dispersionen ist jedoch, daß sie frei von Monomeren sein müssen, um möglichst geruchlose und toxikologisch unbedenkliche Schaumstoffe zu ergeben, denn nur solche Produkte können in den typischen Einsatzgebieten, beispielsweise für Autositze und Polstermöbel, verwendet werden. Dies bedeutet jedoch, daß die Monomeren, beispielsweise mit Hilfe von Dünnschichtverdampfern aus den Dispersionen abgetrennt werden müssen.

Nach Angaben der US-A-2 316 535 werden kolloidale Pigmentmaterialien hergestellt unter Verwendung eines flüssigen mehrwertigen Alkohols aus der Gruppe der Hexan- und Octan-triole oder -tetrole durch Kneten oder Rollen einer plastischen Masse aus Pigment, einem Träger, z. B. Gelatine und dem mehrwertigen Alkohol in einer Knetmaschine.

Zum Stand der Technik gehören, wie die US-A-4 108 791 zeigt, auch Verfahren, bei denen inerte Füllstoffe organischer oder anorganischer Art in eine der zur Verschäumung dienenden

Ausgangskomponenten oder direkt in das Verschäumungsgemisch, beispielsweise in der Mischkammer der Verschäumungsmaschine, einverleibt werden. Aber auch diese Verfahren besitzen schwerwiegende Nachteile. So ist es bei Verwendung üblicher Füllstoffe äußerst schwierig, Dispersionen mit so feiner Kornverteilung herzustellen, daß lagerstabile Mischungen erhalten werden. Die Gefahr der Sedimentbildung ist stets stark ausgeprägt, dies führte dazu, daß derartige Dispersionen zur Vermeidung schwieriger Redispergiervorgänge stets mehr oder weniger intensiv gerührt werden müssen.

Nach einer anderen Verfahrensvariante werden Polymerisate oder anorganische Füllstoffe in Gegenwart von Emulgatoren oder Dispergierhilfsmitteln in Polyether-polyole eingerührt (DE-A-2 457 727 und 2 654 746). Solche Dispersionen sind ebenfalls vielfach nicht ausreichend lagerstabil und müssen daher während der Verarbeitung ständig gerührt werden. Besonders empfindlich reagieren potentiell instabile Dispersionen, wenn man sie mit anderen Aufbaukomponenten zu einer mit Polyisocyanaten verarbeitungsfähigen Polyolkomponente A wie sie beim Zweikomponentenverfahren eingesetzt werden, vermischt. Außerdem können die in der Dispersion enthaltenen Hilfsmittel die Schaumstoffherstellung nachteilig beeinflussen.

Zur Beseitigung dieses Mangels werden gemäß DE-A-2 654 746 (siehe auch Seite 2, Abs. 2) die anorganischen Füllstoffe mit speziellen Polyhydroxylverbindungen, die durch Aufpropfen olefinisch ungesättigter Carbonsäuren auf Polyhydroxylverbindungen hergestellt werden, vermischt. Nachteilig ist auch hier, daß die als Dispergiermedium geeigneten Pfropfpolyole in einem separaten Verfahrensschritt hergestellt werden müssen.

Zwar werden für besondere Zwecke der Schall- und Wärmedämmung mit Schwerspat gefüllte Polyurethanschaumstoffe verwendet. Jedoch müssen die Rohstoffe hierfür mit eigens konstruierten Maschinen verarbeitet werden, insbesondere solchen, die nach dem Prinzip der Niederdrucktechnik und mit Rührwerkvermischung arbeiten.

Die mit der Anwendung dieser Verarbeitungsmaschinen verbundenen Nachteile sind so gravierend, daß der technische Einsatz derartiger gefüllter Polyurethanschaumstoffe bisher sehr begrenzt blieb. Als Nachteile seien beispielhaft genannt: Rohstoffverluste von bis zu 2 kg/Schuß je nach Größe des Mischkopfs, der Viskosität der schaumfähigen Mischung und des Füllstoffgehaltes, und Spülmittelverluste, besonders bei hochviskosen Einsatzstoffen. Es war daher bisher unmöglich, für schnell reagierende Schaumstoffsysteme, beispielsweise für halbharte Polyurethanschäume oder Kaltformschäume derartige Füllstoffe einzusetzen, ohne die gewünschten Verarbeitungseigenschaften zu beeinträchtigen.

Mit gefüllten, insbesondere mit anorganischen Füllstoffen gefüllten Polyurethansystemen gelang es daher im wesentlichen auch nicht, den allgemeinen Trend zur Verarbeitung mit der rationellen Hochdrucktechnik nachzuvollziehen. Neben den maschinellen Problemen stehen weitere Probleme einer Anwendung in großem Rahmen entgegen, die in den Füllstoffdispersionen selbst begründet sind, beispielsweise Sedimentationserscheinungen, welche die Funktionsfähigkeit der Steuersysteme beeinträchtigen und zur Verstopfung ganzer Leitungssysteme führen können. Ferner nimmt die Vermischbarkeit sehr stark mit dem Füllgrad der schaumfähigen Polyurethanmassen in dem technisch interessanten Konzentrationsbereich von 1 bis 20 Gew.-% ab. Das macht sich besonders in der Gegenstrominjektionstechnik, wie sie in den modernen Hochdruckmaschinen angewandt wird, nachteilig bemerkbar.

Aufgabe der vorliegenden Erfindung war es, verstärkte, schaumförmige Kunststoffe aus Füllstoff enthaltenden schaumfähigen Polyisocyanat-Polyol-Systemen, die bei technisch gewünschten Füllstoffkonzentrationen auf Hochdruckmaschinen in schnell reagierenden Ansätzen ohne Umrüstung der Maschine verarbeitet werden können, herzustellen.

Diese Aufgabe wurde gelöst durch ein Verfahren zur Herstellung von verstärkten geschäumten Kunststoffen auf Basis von organischen Polyisocyanaten, Polyolen, feinteiligen Dispersionen von Füllstoffen, Treibmitteln, Katalysatoren und gegebenenfalls Kettenverlängerungsmitteln und Zusatzstoffen, das dadurch gekennzeichnet ist, daß man feinteilige Dispersionen von Füllstoffen verwendet, die durch in situ Zerkleinerung mit örtlichen Energiedichten von 10 bis 3000 $kWh/m^3$ auf Teilchengrößen von kleiner als 7 $\mu m$ und gleichzeitiger Dispergierung von organischen und/oder anorganischen Füllstoffen in Polyolen mit Molekulargewichten von 200 bis 8000 oder organischen Polyisocyanaten hergestellt werden.

Nach dem erfindungsgemäßen Verfahren werden vorzugsweise weich-elastische und halbharte Polyurethanschaumstoffe hergestellt. Es können jedoch auch harte Polyurethanschaumstoffe sowie Integralschaumstoffe und Polyisocyanuratschaumstoffe unter Verwendung der feinteiligen Füllstoff-Dispersionen erhalten werden.

Das erfindungsgemäße Verfahren weist zahlreiche Vorteile auf. Durch die in situ Zerkleinerung der Füllstoffe auf Teilchengrößen kleiner 7 $\mu m$ und gleichzeitiger Dispergierung in Polyol werden stabile Dispersionen erhalten, die nach mehr als 6monatiger Lagerung noch keinerlei Sediment besitzen. Die Füllstoff-Polyol-Dispersionen können auf konventionellen Nieder- und Hochdruckmaschinen verarbeitet werden. Ein Verstopfen der Leitungssysteme und eine Blockierung der Steuergeräte findet nicht statt; eine Abrasion wurde selbst unter Produktionsbedingungen, im Gegensatz zu bekannten Füllstoffdispersionen, nicht beobachtet. Vorteile von Hochdruckmaschinen, wie Produkteinsparung,

Umweltreinhaltung, da keine Spülmittel gebraucht werden, und erhöhte Produktionsgeschwindigkeit können also genutzt werden.

Bei weichelastischen Polyurethanschaumstoffen wird durch das erfindungsgemäße Verfahren die Offenzelligkeit reguliert, die Tragfähigkeit und Elastizität erhöht, ohne daß dadurch die Dehnbarkeit und Reißfestigkeit beeinträchtigt wurde. Bei einzelnen Fällen wurde neben einer bemerkenswerten Erhöhung der Stauchhärte überraschenderweise auch eine Vergrößerung der Reißfestigkeit beobachtet.

In halb-harten Polyurethanschaumstoffen und Integralschaumstoffen wurde mit Hilfe der Füllstoff-Polyol-Dispersion eine gezielte Einstellung der Offenzelligkeit ermöglicht. Als zusätzlich erwünschter Effekt wurde bei höherdichten, mikrozellulären Materialien eine Erhöhung des E-Moduls und eine Verbesserung des thermischen Ausdehnungskoeffizienten festgestellt. Wegen der beträchtlichen Unterschiede in den Ausdehnungskoeffizienten ist es schwierig, Metall- und Kunststoffteile nebeneinander als Konstruktionsmaterialien einzusetzen, auch wenn dies aus Gründen der Gewichtseinsparung und Erniedrigung der Fertigungskosten in vielen Fällen erwünscht wäre. Durch das erfindungsgemäße Verfahren wird dies in vielen Fällen ermöglicht. Problematisch war es bisher, besonders bei der Kalt- und Heißformschaumherstellung sowie bei Folienhinterschäumungen mit Halbhartschaumstoffen diese schnell reagierenden Polyurethansysteme in komplizierten Formen zu lunkerfreien Teilen zu verarbeiten. Dieser Nachteil konnte bei dem erfindungsgemäßen Verfahren durch die zellöffnende Wirkung und die spezielle Rheologie der Systeme mit Hilfe der sehr feinteiligen Füllstoff-Polyol-Dispersion weitgehend behoben werden. Durch Reduzierung der Fehlstellen (Lunker), insbesondere in komplizierten Formen, konnte die Ausschuß- und Nachbesserungsrate wesentlich verringert werden. Auch in dieser Hinsicht unterscheiden sich die erfindungsgemäß verarbeitbaren Dispersionen von bekannten organischen Dispersionen auf Basis von Pfropf- und Fällungspolymeren vorteilhaft.

Zu den für das erfindungsgemäße Verfahren verwendbaren Ausgangskomponenten ist folgendes auszuführen:

Als Polyisocyanate kommen aliphatische und aromatische mehrwertige Isocyanate in Frage, z. B. Alkylendiisocyanate wie Tetra- und Hexamethylendiisocyanat, Arylendiisocyanate und ihre Alkylierungsprodukte wie die Phenylendiisocyanate, Naphthylendiisocyanate, Diphenylmethandiisocyanate, Toluylendiisocyanate, Di- und Triisopropylbenzoldiisocyanate und Triphenylmethantriisocyanate, p-Isocyanatophenyl-thiophosphorsäure-triester, p-Isocyanato-phenylphosphorsäure-triester, Aralkyldiisocyanate wie 1-(Isocyanatophenyl)-äthylisocyanat oder Xylylendiisocyanate sowie auch die durch die verschiedensten Substituenten, wie Alkoxy-, Nitro- und/oder Chlorreste substituierten Polyisocyanate, ferner solche Polyisocyanate, die mit unterschüssigen Mengen von Polyhydroxylverbindungen wie Trimethylolpropan, Hexantriol, Glycerin, Oligopropylenglykol-Mischungen oder Butandiol sowie durch Polyesterole modifiziert sind. Geeignet sind ferner z. B. mit Phenolen oder Bisulfit verkappte Polyisocyanate, acetalmodifizierte Isocyanate sowie amid-, acylharnstoff-, carbodiimid- und isocyanurat-modifizierte Polyisocyanate.

Vorzugsweise werden Toluylendiisocyanate, Diphenylmethandiisocyanate, Mischungen aus Diphenylmethan-diisocyanaten und Polyphenyl-polymethylen-polyisocyanaten (Roh-MDI), Gemische aus Toluylen-diisocyanaten und Roh-MDI, mit Polyhydroxylverbindungen modifizierte Polyisocyanate und Isocyanuratringe enthaltende Polyisocyanate verwendet.

Als Polyole werden bei dem erfindungsgemäßen Verfahren vorzugsweise übliche lineare und/oder verzweigte Polyesterole und insbesondere Polyätherole mit Molekulargewichten von 200 bis 8000, vorzugsweise 800 bis 6000 und insbesondere 1800 bis 4500 verwendet. In Betracht kommen jedoch auch andere hydroxylgruppenhaltige Polymere mit den genannten Molekulargewichten, beispielsweise Polyesteramide, Polyoxymethylene und Polycarbonate, insbesondere solche, hergestellt aus Diphenylcarbonat und Hexandiol-1,6 durch Umesterung.

Die Polyesterole können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen und Triolen, hergestellt werden. Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein-, Glutar- und Adipinsäure und aromatische Dicarbonsäuren, wie Phthalsäure und Terephthalsäure. Beispiele für zwei- und mehrwertige, insbesondere zwei- und dreiwertige Alkohole sind: Äthylenglykol, Diäthylenglykol, 1,2- bzw. 1,3-Propylenglykol, Dipropylenglykol, Decandiol-1,10, Glycerin, Trimethylolpropan und vorzugsweise Butandiol-1,4 und Hexandiol-1,6.

Die Polyesterole besitzen Molekulargewichte von 800 bis 5000, vorzugsweise von 1000 bis 3000 und Hydroxylzahlen von 25 bis 170, vorzugsweise von 40 bis 110.

Vorzugsweise werden Polyätherole verwendet, die nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Äthylenoxid und 1,2-Propylenoxid. Die Alkylenoxide können einzeln, alternierend nacheinander oder als Mischungen verwendet werden. Als Startermoleküle kommen

beispielsweise in Betracht: Wasser, Dicarbonsäuren, wie Bernsteinsäure, Adipinsäure, Phthalsäure und Terephthalsäure, primäre Amine sowie gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Äthylendiamin, 1,2- bzw. 1,3-Propylendiamin, 1,4-Butylendiamin, 1,6-Hexamethylendiamin, 4,4'-, 2,4'- und 2,2'-Diaminodiphenylmethan sowie 2,4- und 2,6-Toluylen-diamine, Alkanolamine, wie Äthanolamin, Diäthanolamin, N-Methyl- und N-Äthyl-diäthanolamin und Triäthanolamin, Hydrazin und vorzugsweise mehrwertige, insbesondere zwei- und dreiwertige Alkohole, wie Äthylenglykol, Propylenglykol-1,2 und -1,3, Diäthylenglykol, Dipropylenglykol, Butylenglykol-1,4, Hexamethylenglykol-1,6, Glycerin, Trimethylolpropan, Pentaerythrit, Sorbit und Saccharose.

Bevorzugt verwendet werden im wesentlichen lineare und trifunktionelle Polyätherole mit Molekulargewichten von 200 bis 8000, vorzugsweise von 800 bis 6000 und besonders 1800 bis 4500 und Hydroxylzahlen von 15 bis 800, vorzugsweise von 25 bis 200, die sowohl Äthylenoxid- als auch 1,2-Propylenoxideinheiten in der Oxyalkylenkette enthalten, wobei diese entweder statistisch oder blockweise in der Oxyalkylenkette angeordnet sein können. Insbesondere eingesetzt werden Polyätherole, die vorzugsweise primäre Hydroxylgruppen besitzen.

Die verwendeten Polyole können eine Hydroxylzahl aufweisen, die innerhalb eines breiten Bereiches variieren kann. Im allgemeinen liegen die Hydroxylzahlen der erfindungsgemäß verwendeten Polyole innerhalb des Bereiches von etwa 15 bis etwa 800 und darüber, vorzugsweise von etwa 25 bis 200 und insbesondere von etwa 25 bis etwa 45. Die Hydroxylzahl ist definiert als die Anzahl von mg Kaliumhydroxid, die zur vollständigen Hydrolyse des aus 1 g Polyol hergestellten vollständig acetylierten Derivats erforderlich ist. Die Hydroxylzahl kann auch durch die folgende Gleichung definiert werden:

$$OH = \frac{56{,}1 \times 1000 \times f}{MG}$$

worin bedeutet:

| | |
|---|---|
| OH | die Hydroxylzahl des Polyols, |
| f | die Funktionalität, d. h. die durchschnittliche Anzahl der Hydroxylgruppen pro Molekül Polyol, und |
| MG | das Molekulargewicht des Polyols. |

Welches Polyol jeweils verwendet wird, hängt von der Endverwertung des daraus herzustellenden Polyurethanproduktes ab. Das Molekulargewicht oder die Hydroxylzahl wird in geeigneter Weise so ausgewählt, daß weichelastische, halb-harte und harte Schaumstoffe erhalten werden. Die Polyole weisen vorzugsweise eine Hydroxylzahl von etwa 200 bis etwa 800 auf, wenn sie für harte (starre) Schäume verwendet werden, sie weisen eine Hydroxylzahl von etwa 30 bis etwa 150 auf für die Herstellung von halb-harten Schäumen und von etwa 20 bis etwa 70 oder mehr bei der Verwendung für die Herstellung flexibler Schäume. Durch diese Grenzen ist die vorliegende Erfindung jedoch keineswegs beschränkt, sondern diese dienen lediglich der Erläuterung der großen Anzahl von möglichen Kombinationen der genannten Polyole.

Wesentliches Merkmal der vorliegenden Erfindung ist die Mitverwendung von Füllstoffen zur Herstellung der geschäumten, verstärkten Kunststoffe, und zwar in Form von feinteiligen Dispersionen, die durch in situ Zerkleinerung mit hoher örtlicher Energiedichte auf Teilchengrößen von kleiner als 7 µm und gleichzeitiger Dispergierung von organischen und/oder anorganischen Füllstoffen in den oben genannten Polyolen oder organischen Polyisocyanten als Dispergiermedium hergestellt werden.

Als organische Füllstoffe können organische Materialien verwendet werden, die in dem Dispergiermedium nicht oder höchstens schwach quellbar sind, und genügend spröde sind, um unter den technischen Bedingungen in der Naßmahlung in wirtschaftlichen Zeiten auf die erforderliche Teilchengröße zerkleinert werden zu können. Im einzelnen seien beispielhaft genannt:

Sprödharze, wie sie bekannt sind als Bindemittel für die Druckindustrie z. B. solche auf Basis Phenol und Formaldehyd oder Kolophonium oder Melamin und Formaldehyd, Polyester vorzugsweise vernetzte Polyester auf Basis von di- oder höherfunktionellen Carbonsäuren mit di- oder höherfunktionellen Alkoholen, Copolymerisate des Styrols mit Monomeren wie (Meth)acrylsäurederivaten, Homo- und Copolymerisate des Cyclopentadiens, Ketonharze, z. B. auf Basis von Cyclohexanon und spröde Polyurethanmaterialien, beispielsweise vernetzte Polyurethane und Isocyanuratgruppen enthaltende Polyurethane, sowie organische Pigmente und Kohle.

Besonders bewährt und daher vorzugsweise verwendet werden jedoch anorganische Füllstoffe, wie die an sich bekannten üblichen Füllstoffe, Verstärkungsmittel, Beschwerungsmittel, Mittel zur Verbesserung des Abriebverhaltens in Anstrichfarben, Beschichtungsmitteln usw. Verwendet werden

können jedoch auch anorganische Pigmente. Im einzelnen seien beispielhaft genannt: silikatische Mineralien, beispielsweise Schichtsilikate, wie Antigorit, Serpentin, Hornblenden, Amphibole, Chrisotil, Talkum, Metalloxide, wie Kaolin, Aluminiumoxide, Titanoxide, Eisenoxide, Metallsalze, wie Kreide, Schwerspat, Bariumsulfat, anorganische Pigmente, wie Cadmiumsulfid, Zinksulfid, sowie Glas und Asbestmehl.

Gegebenenfalls kann es vorteilhaft sein, zur Herstellung der Füllkörper-Dispersionen Dispergierhilfsmittel in Mengen von 0,005 bis 10%, vorzugsweise von 0,01 bis 2%, bezogen auf das Gewicht des Füllstoffs mitzuverwenden. In Betracht kommen beispielsweise Dispergierhilfsmittel, wie Silicone, Ester höherer Fettsäuren, beispielsweise Mono-, Di- und Triglyceride der Ölsäure oder der Leinöl-Fettsäuren.

Wie bereits dargelegt wurde, ist für die Herstellung der geschäumten, verstärkten Kunststoffe wesentlich, daß die organischen und/oder vorzugsweise anorganischen Füllstoffe in situ in den organischen Polyisocyanaten oder vorzugsweise Polyolen mit Hilfe hoher örtlicher Energiedichte auf Teilchengrößen kleiner als 7 µm, vorzugsweise 0,01 bis 7 µm und insbesondere 0,05 bis 2,5 µm zerkleinert und hierbei gleichzeitig dispergiert werden. Als hohe örtliche Energiedichte sind hierbei Energiedichten von 10 bis 3000 $kWh/m^3$, vorzugsweise von 20 bis 2500 $kWh/m^3$ zu verstehen.

Die Füllstoff-Dispersionen können im einzelnen vorteilhaft auf folgende Art hergestellt werden:

Die Füllstoffe werden zunächst auf Teilchengrößen kleiner als 100 µm zerkleinert. Hierzu können grobkörnige Materialien beispielsweise auf mechanischen Mühlen, wie Pralltellermühlen, Stiftmühlen u. a. gemahlen werden. Es ist jedoch auch möglich, mit Hilfe von physikalischen Methoden, beispielsweise durch Umfällen, Teilchengrößen kleiner als 100 µm zu erhalten.

Die so vorbehandelten Füllstoffe werden nun in Gegenwart von Polyisocyanaten oder Polyolen und gegebenenfalls Dispergierhilfsmittel in situ auf Teilchengrößen kleiner als 7 µm zerkleinert (Naßzerkleinerung).

Die Naßzerkleinerung kann beispielsweise in mechanischen Dispergiervorrichtungen, vorzugsweise in Dispergiermaschinen hoher örtlicher Energiedichte mit Mahlkörpern, wie z. B. Rührwerkskugelmühlen, Sandmühlen, Netsch-Mühlen, Dyno-Mühlen, Planetenkugelmühlen, Kesselmühlen und Attritoren durchgeführt werden. Als Mahlkörper kommen vorzugsweise kugelförmige Mahlkörper in Betracht, die beispielsweise aus Glas, Keramik, Metall oder hartem abriebfestem Kunststoff, z. B. Polyamid, sein können und deren Durchmesser zwischen 0,2 bis 8, vorzugsweise 0,4 bis 5 mm beträgt.

Zum Naßzerkleinern wird der Füllstoff mit dem Polyol als Dispergiermedium in solchen Mengen gemischt, daß die resultierende Dispersion einen Füllstoffgehalt von 3 bis 50 Gew.-%, vorzugsweise von 5 bis 20 Gew.-%, bezogen auf das Gesamtgewicht besitzt. Hierbei kann die Gesamtmenge an Füllstoff mit der Gesamtmenge an Dispergiermedium sowie gegebenenfalls Dispergierhilfsmittel gemischt, zerkleinert und gleichzeitig dispergiert werden. Es ist jedoch auch möglich, die gesamte Menge an Dispergiermedium mit einem bestimmten Teil, beispielsweise 10 bis 80%, vorzugsweise 40 bis 60% des Füllstoffs zu mischen und dieses Gemisch auf eine Teilchengröße des Füllstoffs von 2 bis 10 µm zu zerkleinern und danach der Mischung die restliche Füllstoffmenge einzuverleiben oder eine Teilmenge Dispergiermedium mit der Gesamtmenge an Füllstoff in Gegenwart von Dispergierhilfsmittel zu vermahlen und im Laufe des Mahlvorganges weiteres Dispergiermedium und gegebenenfalls Dispergierhilfsmittel hinzuzufügen.

In manchen Fällen kann es vorteilhaft sein, die Füllstoffe im Polyisocyanat und Polyol als Dispergiermedium anteilig zu zerkleinern. Das kann beispielsweise der Fall sein bei hohem Füllgrad oder bei ungünstigem Formfaktor der dispergierten Teilchen, wodurch das rheologische Verhalten der Dispersion ungünstig, z. B. im Sinne einer Strukturviskosität beeinflußt wird.

Die erhaltenen Füllstoff-Polyisocyanat- und Füllstoff-Polyol-Dispersionen, die mit einem Feststoffgehalt von 15 Gew.-% bei 25° C Viskositäten von weniger als 2500 cP, vorzugsweise von 1000 bis 2000 cP besitzen, und auf üblichen Verarbeitungsmaschinen zur Polyurethanherstellung sehr gut verarbeitbar sind, können gegebenenfalls vor der Verarbeitung mit zusätzlichem Polyisocyanat oder Polyol auf die erforderlichen Feststoffgehalte eingestellt werden.

Die geschäumten, verstärkten Kunststoffe werden nach dem erfindungsgemäßen Verfahren aus den oben genannten organischen Polyisocyanaten, Polyolen und Füllstoff-Dispersionen in Gegenwart von Katalysatoren, Treibmitteln und gegebenenfalls Kettenverlängerungsmitteln und Zusatzstoffen hergestellt.

Geeignete Katalysatoren zur Beschleunigung der Polyurethanbildung zwischen den Polyolen, dem Wasser, gegebenenfalls Kettenverlängerungsmitteln und den Polyisocyanaten sind beispielsweise tertiäre Amine, wie Dimethylbenzylamin, N,N,N',N'-Tetramethyl-diamino-äthyläther, Bis-(dimethylaminopropyl)-harnstoff, N-Methyl- bzw. N-Äthylmorpholin, Dimethylpiperazin, 1,2-Dimethylimidazol, 1-Azo-bicyclo-(3,3,0)-octan und vorzugsweise Triäthylendiamin, Metallsalze, wie Zinndioctoat, Bleioctoat, Zinn-diäthylhexoat und vorzugsweise Zinn-(II)salze und Dibutylzinndilaurat sowie insbesondere Mischungen aus tertiären Aminen und organischen Zinnsalzen. Vorzugsweise verwendet werden 0,1 bis 5,0 Gew.-% Katalysator auf Basis tertiärer Amine und/oder 0,01 bis 1,0 Gew.-% Metallsalze, bezogen auf das Polyolgewicht.

Zur Herstellung von Polyisocynuratschaumstoffen haben sich die üblichen Cyclisierungs- und Polymerisationskatalysatoren für Polyisocyanate bewährt. Als Beispiele seien genannt: starke Basen,

wie quaternäre Ammoniumhydroxide, beispielsweise Benzyltrimethylammoniumhydroxid; Alkalimetallhydroxide, beispielsweise Natrium- oder Kaliumhydroxid; Alkalimetallalkoxide, beispielsweise Natriummethylat und Kaliumisopropylat; Trialkylphosphine, beispielsweise Triäthylphosphin; Alkylaminoalkylphenole, beispielsweise 2,4,6-Tris-(dimethylaminomethyl)-phenol; 3- und/oder 4-substituierte Pyridine, beispielsweise 3- oder 4-Methylpyridin; metall-organische Salze, beispielsweise Tetrakis-(hydroxyäthyl)-natriumborat; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctoat, Kalium-2-äthyl-hexoat, Kalium-benzoat, Natriumpikrat und Phthalimid-kalium. Vorzugsweise verwendet werden die stark basischen N,N',N''-Tris-(dialkylaminoalkyl)-s-hexahydrotriazine, beispielsweise das N,N',N''-Tris-(dimethylaminopropyl)-s-hexahydrotriazin.

Die geeignete Menge an Katalysator zur Herstellung der erfindungsgemäßen Polyurethankunststoffe ist abhängig von der Wirksamkeit des in Frage kommenden Katalysators. Im allgemeinen hat es sich als zweckmäßig erwiesen, 1 bis 15 Gewichtsteile, vorzugsweise 3,5 bis 10 Gewichtsteile Katalysator für jeweils 100 Gewichtsteile an organischem Polyisocyanat zu verwenden.

Zu Treibmitteln, welche im erfindungsgemäßen Verfahren verwendet werden können, gehört Wasser, das mit Isocyanatgruppen unter Bildung von Kohlendioxid reagiert. Die Wassermengen, die zweckmäßigerweise verwendet werden können, betragen 0,1 bis 3%, bezogen auf das Gewicht an Polyisocyanat. Gegebenenfalls können auch größere Wassermengen verwendet werden.

Andere verwendbare Treibmittel sind niedrig siedende Flüssigkeiten, die unter dem Einfluß der exothermen Polymerisationsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluoräthan und 1,1,2-Trichlor-1,2,2-trifluoräthan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von geschäumten Polyurethanmassen hängt ab von der Schaumdichte, die man erreichen will, sowie gegebenenfalls von der Mitverwendung von Wasser. Im allgemeinen liefern Mengen von 5 bis 40 Gewichtsprozent, bezogen auf 100 Gewichtsteile organisches Polyisocyanat, zufriedenstellende Ergebnisse.

Gegebenenfalls ist es auch zweckmäßig, zur Herstellung der geschäumten, verstärkten Kunststoffe neben den höhermolekularen Polyolen zusätzlich Kettenverlängerungsmittel zu verwenden. Die Kettenverlängerungsmittel besitzen Molekulargewichte kleiner als 2000, vorzugsweise von 30 bis 600 und weisen vorzugsweise zwei aktive Wasserstoffatome auf. In Betracht kommen beispielsweise aliphatische und/oder aromatische Diole mit 2 bis 14, vorzugsweise 2 bis 6 Kohlenstoffatomen, wie Propandiol, Pentandiol, Hexandiol-1,6 und vorzugsweise Äthandiol, Butandiol-1,4 und Bis-(2-hydroxyäthyl)-hydrochinon, Diamine, wie Äthylendiamin und gegebenenfalls 3,3'- bzw. 3,3',5,5'-di- bzw. tetrasubstituierte 4,4'-Diaminodiphenylmethane, Äthanolamine, wie Triäthanolamin und Polyhydroxylverbindungen, wie Glycerin, Trimethylolpropan und niedermolekulare hydroxylgruppenhaltige Polyalkylenoxide aus den vorgenannten Ausgangsstoffen.

Der Reaktionsmischung können auch noch Zusatzstoffe einverleibt werden. Genannt seien beispielsweise oberflächenaktive Schaumstabilisatoren, Hydrolysenschutzmittel, Porenregler, fungistatisch und bakteriostatisch wirkende Substanzen, Farbstoffe, Pigmente und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxäthylierte Alkylphenole, oxäthylierte Fettalkohole, Paraffinöle, Rizinusöl- bzw. Rizinolsäureester und Türkischrotöl, die in Mengen von 0,2 bis 6 Gewichtsteilen pro 100 Gewichtsteile Polyisocyanat angewandt werden.

Geeignete Flammschutzmittel sind beispielsweise Trikresylphosphat, Tris-2-chloräthylphosphat, Tris-chlorpropylphosphat und Tris-2,3-dibrompropylphosphat.

Außer den bereits genannten halogensubstituierten Phosphaten können auch anorganische Flammschutzmittel, wie Antimontrioxid, Arsenoxid, Ammoniumphosphat und Calciumsulfat zum Flammfestmachen der Polyurethanschaumstoffe verwendet werden. Im allgemeinen hat es sich als vorteilhaft erwiesen, 5 bis 50 Gewichtsteile, vorzugsweise 5 bis 25 Gewichtsteile der genannten Flammschutzmittel für jeweils 100 Gewichtsteile an organischen Polyisocyanat zu verwenden.

Nähere Angaben über die oben genannten anderen üblichen Zusatzstoffe sind der Fachliteratur, beispielsweise der Monographie von J. H. Saunders und K. C. Frisch »High Polymers« Band XVI, Polyurethanes, Teil 1 und 2, Verlag Interscience Publishers 1962 bzw. 1964, zu entnehmen.

Wie bereits dargelegt wurde, können zur Herstellung der verstärkten, geschäumten Kunststoffe nach dem erfindungsgemäßen Verfahren die Füllstoff-Polyol-Dispersionen mit den oben genannten Polyolen verdünnt und so auf den erforderlichen, vorteilhaften Füllstoffgehalt eingestellt werden.

Zur Herstellung von Polyurethanschaumstoffen werden die Polyisocyanate und Polyole bzw. Mischungen aus Polyolen und Kettenverlängerungsmitteln in solchen Mengen zur Umsetzung

gebracht, daß das Verhältnis von OH : NCO-Gruppen 1 : 0,8 bis 2,5, vorzugsweise 1 : 0,9 bis 1,2, insbesondere ungefähr 1 : 1 beträgt und der Füllstoffgehalt in der schaumfähigen Mischung 0,5 bis 15 Gew.-%, vorzugsweise 1 bis 10 Gew.-%, bezogen auf das Gewicht der Polyisocyanat-Polyolmischung ist. Wird Wasser als Treibmittel mitverwendet, so beträgt das Verhältnis von NCO-Gruppen des Polyisocyanats zu Zerewitinoff-aktiven Wasserstoffatomen — gebunden an Polyol, gegebenenfalls Kettenverlängerungsmittel und Wasser — zweckmäßigerweise 0,8 bis 2,5, vorzugsweise 0,9 bis 1,2.

Zur Herstellung von Polyisocyanuratschaumstoffe haben sich Mengenverhältnisse von NCO-Gruppen des Polyisocyanats zu Hydroxylgruppen des Polyols von 6 bis 60 : 1, vorzugsweise 2 bis 10 : 1 bewährt. Der Füllstoffgehalt beträgt 0,5 bis 15 Gew.-%, vorzugsweise 1 bis 10 Gew.-%, bezogen auf das Gesamtgewicht von Polyisocyanat und Polyol.

Die verstärkten geschäumten Kunststoffe werden nach dem Präpolymer- und vorzugsweise dem one shot-Verfahren hergestellt. Hierzu mischt man die Polyisocyanate mit den Füllstoff-Polyol-Dispersionen bzw. Polyolen, Katalysatoren, Treibmitteln und gegebenenfalls Kettenverlängerungsmitteln und Zusatzstoffen in den genannten Mengenverhältnissen intensiv bei Temperaturen von 0 bis 50° C, vorzugsweise 15 bis 40° C und läßt danach die Reaktionsmischung in offenen oder geschlossenen Formen aufschäumen.

Die erfindungsgemäß hergestellten Polyurethanschaumstoffe besitzen bei freier Aufschäumung Dichten von 10 bis 300 g/Liter, wobei die Polyurethan-Weichschaumstoffe Dichten von 10 bis 60 g/Liter, die halbharten Schaumstoffe Dichten von 60 bis 130 g/Liter und die Polyurethan-Integralschaumstoffe Dichten von 60 bis 300 g/Liter aufweisen. Die Polyurethan-Schaumstoffe zeichnen sich insbesondere durch ihren hohen Offenzelligkeitsgrad und guten Stauchhärten aus. Die Produkte werden vorzugsweise als Polsterschaumstoffe, auch für Sicherheitsabdeckungen sowie für Schuhsohlen, Armlehnen, Nackenstützen, Sitzpolster u. a. verwendet. Die Polyisocyanuratschaumstoffe besitzen Dichten von 5 bis 100 g/Liter, vorzugsweise von 10 bis 50 g/Liter. Aufgrund ihrer vorzüglichen Isoliereigenschaften eignen sie sich besonders für Doppelbandelemente.

Die in den Beispielen genannten Teile sind Gewichtsteile.

## Beispiel 1

500 Teile eines durch gemeinsame Fällung aus Bariumsulfat und Kieselsäure hergestellten Produkts (Glühverlust 6 Gew.-%, $SiO_2$-Gehalt 73% und $BaSO_4$-Gehalt 21,4%, pH-Wert nach DIN 53 200 = 7,0) mit einer mittleren Teilchengröße von 70 µm werden in 2000 Teilen eines Polyätherol, hergestellt aus Glycerin als Startermolekül und Propylenoxid und Äthylenoxid mit einem Molekulargewicht von 4900 und einer Hydroxylzahl von 35 eingemischt und 4 Stunden in einer Kugelmühle, deren Innenwand gummiert war und wobei als Kugeln Glaskugeln verwendet wurden, zerkleinert. Die Drehzahl der Kugelmühle wurde so gewählt, daß die örtliche Energiedichte ungefähr 1500 kWh/$m^3$ betrug und während der Dispergierzeit in der Dispersion eine Temperatur von 35° C nicht überschritten wurde. Danach wurde die Dispersion aus der Mühle entnommen und eine Sedimentationsanalyse durchgeführt. Hierbei ergab sich, daß 95% der in der Dispersion enthaltenen Teilchen kleiner als 1 µm und 50% der Teilchen kleiner als 0,5 µm waren. Die lagerstabile Dispersion zeigte nach mehr als 6 Monaten noch keinerlei Sedimentation.

## Beispiel 2

480 Teile eines Kaolins mit einem pH-Wert von 5,5 und einem spezifischen Gewicht von 3,6 g/$cm^3$, bei dem 99,5 Gew.-% der Teilchen kleiner als 10 µm und 80 Gew.-% der Teilchen kleiner als 2 µm waren, wurden in 1800 Teilen eines Polyätherols, hergestellt auf Basis von Trimethylolpropan als Starter, Propylenoxid und Äthylenoxid mit einem Molekulargewicht von 5000 und einer Hydroxyzahl von 32 aufgeschlämmt und anschließend in 5 Passagen durch eine kontinuierliche Rührwerkskugelmühle durchgeleitet. Die Gesamtdauer des Mahlvorganges betrug 2 Stunden, die örtliche Energiedichte war ungefähr 800 kWh/$m^3$. Eine Sedimentationsanalyse der erhaltenen Dispersion ergab, daß weniger als 1 Gew.-% der Teilchen größer als 3 µm waren, ungefähr 80 Gew.-% der Teilchen waren ungefähr 1 µm 20 Gew.-% der Teilchen kleiner als 0,5 µm. Die Dispersion zeigte nach 4 Monaten noch keine Sedimentation.

## Beispiel 3

200 Teile eines handelsüblichen Talkummehls mit einem Gehalt an $SiO_2$ von 62,6 Gew.-%, MgO von 31,4%, $Al_2O_3$ von 0,20 Gew.-%, $Fe_2O_3$ von 0,10 Gew.-%, Wasser von 4,8 Gew.-%, einer Dichte von 2,77 g/$cm^3$ und einer Korngröße von ungefähr 60 µm wurden in 800 Teilen eines Polyätherols auf Basis Trimethylolpropan, Propylenoxid und Äthylenoxid mit einem Molekulargewicht von 4900 und einer Hydroxylzahl von 35 gemischt und danach bei 40 in einer kontinuierlichen Rührwerkskugelmühle mit

einer Glaskugelfüllung (Kugeldurchmesser 3 mm) in 5 Passagen zerkleinert. Die Gesamtdauer des Mahlvorgangs betrug 5 Stunden, die örtliche Energiedichte lag bei ungefähr 600 kWh/m³. Eine Sedimentationsanalyse der erhaltenen Dispersion ergab, daß 92% der Teilchen einen Durchmesser kleiner als 3 μm hatten.

## Beispiel 4

### Herstellung eines Halbhartpolyurethanschaumes zur Folienhinterschäumung

Eine Mischung aus

a) 69,5 Teilen eines auf Glycerin gestarteten Polyätherols auf Basis Äthylenoxid und Propylenoxid mit einer OH-Zahl von 32,5 und einem Molekulargewicht 5000,
b) 20 Teilen der gemäß Beispiel 3 hergestellten Füllstoff-Polyätheroldispersion,
c) 8,4 Teilen eines Polyätherols auf Basis Äthylendiamin-Propylenoxid mit einem Molekulargewicht von 300,
d) 0,3 Teilen Dimethyläthanolamin und
e) 1,8 Teilen Wasser

werden mit

50 Teilen eines Gemisches aus Diphenylamin-diisocyanaten und Polyphenyl-polymethylen-polyisocyanaten (Roh-MDI) auf einer Niederdruckschaummaschine zu einem Aufprallschutz mit PVC-Folienüberzug verarbeitet. Bei der Verarbeitung wurde ein Schaumdruck von 30 mbar gemessen. Das geschäumte Formteil war praktisch störstellenfrei.

## Vergleichsbeispiel

Verfährt man analog den Angaben des Beispiels 4, verwendet jedoch anstelle der Komponenten (a) und (b) 89,5 Teile der Komponente (a), so wird ein Schäumdruck von 350 mbar gemessen. Die Schaumstruktur des Formkörpers war unregelmäßig und von Lunkern durchsetzt.

## Beispiel 5

### Herstellung eines Weichschaumstoffes für Sitzmöbel

800 Teile einer Mischung aus

a) 70 Teilen eines auf Glycerin gestarteten Polyätherols auf Basis Propylenoxid/Äthylenoxid mit einem Molekulargewicht von 4900, einer Hydroxylzahl von 36 und 73% primären Hydroxylgruppen,
b) 30 Teilen der gemäß Beispiel 3 hergestellten Füllstoff-Polyätherol-Dispersion,
c) 2,8 Teilen Wasser,
d) 0,4 Teilen eines oxypropylierten Pentaerythrits mit einem durchschnittlichen Molekulargewicht von 620,
e) 2,0 Teilen N-Methyldicyclohexylamin,
f) 0,5 Teilen eines Polydimethylsiloxans (Handelsprodukt Tegostab B 4690 der Fa. Goldschmidt AG) und
g) 0,05 Teilen Dibutylzinndilaurat

werden mit

200 Teilen eines Gemisches aus Diphenylmethan-diisocyanaten und Polyphenyl-polymethylen-polyisocyanaten (Roh-MDI) bei 24° C intensiv vermischt.

800 Teile dieser Mischung gießt man in eine Aluminiumform (40 × 40 × 10 cm) und läßt sie dann aufschäumen.
Der erhaltene Polyurethanschaumstoff weist die folgenden mechanischen Eigenschaften auf

| | |
|---|---|
| Zugfestigkeit (N/mm²) | 0,115 |
| Weiterreißfestigkeit (N/mm) | 0,573 |
| Stauchhärte bei 20% Stauchung (N/mm²) | 0,206 |
| Stauchhärte bei 40% Stauchung (N/mm²) | 0,444 |

## Vergleichsbeispiel

Verfährt man analog den Angaben des Beispiels 5, verwendet jedoch anstelle der Komponenten (a) und (b) 100 Teile der Komponente (a), so erhält man einen Polyurethan mit den folgenden mechanischen Eigenschaften:

| | |
|---|---|
| Zugfestigkeit ($N/mm^2$) | 0,086 |
| Weiterreißfestigkeit (N/mm) | 0,0434 |
| Stauchhärte bei 20% Stauchung ($N/mm^2$) | 0,172 |
| Stauchhärte bei 60% Stauchung ($N/mm^2$) | 0,379 |

Beispiel 5 und das dazugehörige Vergleichsbeispiel zeigen, daß durch den Zusatz der Füllstoff-Polyätherat-Dispersion die Tragefähigkeit des Polyurethanschaumstoffs erhöht und gleichzeitig die Zug- und Weiterreißfestigkeit verbessert wurde. Das übrige Eigenschaftsbild bleibt praktisch gleich.

## Beispiele 6 bis 8

### Herstellung von Polyurethan-Kaltweichschaumstoffen

Eine Mischung aus

560 Teilen eines trifunktionellen Polyätherols auf Basis Glycerin; Äthylenoxid und Propylenoxid mit einer Hydroxylzahl von 34 und einem Molekulargewicht von 4900,
240 Teilen einer gemäß Beispiel 3 mit verschiedenen Füllstoffen hergestellten Polyätherdispersionen,
22,4 Teilen Wasser,
3,2 Teilen eines auf Pentaerythrit gestarteten Polyätherols auf Basis Propylenoxid mit einer Hydroxylzahl von 360 und einem Molekulargewicht von 600,
16,0 Teilen Dicyclohexyl-methylamin
4,0 Teilen eines Schaumstabilisators auf Polysiloxan-Polyoxyalkylen-polymerisationsbasis (®Tegostab B 4690 der Goldschmitt AG, Essen) und
0,4 Teilen Dibutylzinndilaurat

werden mit

282 Teilen einer Mischung aus 80 Gew.-% eines handelsüblichen Toluylen-diisocyanat-Gemisches (bestehend aus 80 Teilen 2,4- und 20 Teilen 2,6-Toluylen-diisocyanat) und 20 Gew.-% eines Gemisches aus Diphenylmethan-diisocyanaten und Polyphenyl-polymethylen-polyisocyanaten (Roh-MDI)

mit Hilfe eines Rührers intensiv vermischt und in Formen zu Kissen mit den Abmessungen 40 × 40 × 10 cm verschäumt. Aus den erhaltenen Formteilen wurden Prüfkörper entnommen.

Die Art und Menge der verwendeten Füllstoffe und die mechanischen Eigenschaften der erhaltenen Polyurethan-Schaumstoffe sind in der folgenden Tabelle zusammengefaßt.

Die nach dem erfindungsgemäßen Verfahren hergestellte Polyurethan-Schaumstoffe zeigen eine deutlich verbesserte Reißdehnung, Weiterreißfestigkeit und Stauchhärte.

Tabelle

| Beispiel | Füllstoffe Art | Gew.-% im Polyurethan-schaumstoff | Mechanische Eigenschaften des Polyurethan-Schaumstoffes | | | | | | |
|---|---|---|---|---|---|---|---|---|---|
| | | | Raum-gewicht (g/l) | Zug-festigkeit (k Pa) | Reiß-dehnung (%) | Weiter-reißfestigkeit (N/mm) | Stauchhärte (k Pa) | | |
| | | | | | | | 20 % | 40 % | 60 % |
| 6 | China Clay Supreme | 4,2 | 49,9 | 158 | 146 | 0,736 | 2,92 | 3,98 | 6,84 |
| 7 | Dicyclopentadienylharz | 2,1 | 50,2 | 159 | 142 | 0,707 | 2,81 | 3,95 | 6,98 |
| 8 | Kohlenstaub | 4,2 | 47,4 | 118 | 118 | 0,694 | 3,49 | 4,79 | 7,76 |
| Vergleichs-beispiel | | – | 49,5 | 105 | 153 | 0,483 | 1,87 | 2,58 | 4,32 |

### Beispiel 9

#### Komponente A

100 Teile einer Dispersion aus 10 Teilen eines handelsüblichen Natriumaluminiumsilikates (®Transpafill der Firma Degussa) und 90 Teilen eines Polyesterols aus Adipinsäure, Butandiol-1,4, Pentandiol-1,5 und Hexandiol-1,6 mit einer Hydroxylzahl von 56 und einer Viskosität bei 75°C von 650 mPas, die durch einstündiges Mischen und Mahlen der Komponenten mit einem Dissolver erhalten wurde,

werden mit

| | |
|---|---|
| 13,96 | Teilen Äthylenglycol, |
| 1,64 | Teilen einer 33%igen Lösung von Diazabicyclooctan in Dipropylenglykol, |
| 0,68 | Teilen Silikonöl (®Tegostab B 4822, der Goldschmitt AG, Esssen), |
| 13,68 | Teilen Trichlorfluormethan, |
| 3,42 | Teilen Trichlor-trifluor-äthan, |
| 3,42 | Teilen Ruß (®Printex 60 der Firma Degussa) und |
| 0,014 | Teilen Dibutylzinndilaurat |

bis zur vollständigen Homogenisierung gemischt.

#### Komponente B

Zur Herstellung eines isocyanatgruppenhaltigen Präpolymeren werden 100 Teile eines Polyester-polyols auf Basis Adipinsäure, Diäthylenglykol und Trimethylolpropan mit einer mittleren Funktionalität von 2,6, einer OH-Zahl von 50 bis 55 und einer Viskosität, gemessen bei 75°C, von 1300 mPas mit einer Mischung aus 162,57 Teilen 4,4'-Diphenylmethan-diisocyanat und 37,51 Teilen eines handelsüblichen carbodiimidmodifizierten 4,4'-Diphenylmethan-diisocyanats bei einer Temperatur von 80°C in 2 Stunden zur Reaktion gebracht.

Man erhält ein isocyanatgruppenhaltiges, carbodiimidmodifiziertes Präpolymeres mit einem NCO-Gehalt von 19,8 Gew.-% und einer Viskosität von 2400 mPas bei 20°C.

Komponente A und Komponente B werden auf 23°C erwärmt und im Gewichtsverhältnis 100 : 92 10 Sekunden lang intensiv gemischt und in eine auf 45°C temperierte Aluminiumform gegossen.

Die Startzeit beträgt 18 Sekunden, die Steigzeit 45 Sekunden. Der frei aufschäumende Schaumstoff besitzt eine Rohdichte von 68 g/l.

Das Formteil kann nach 3 Minuten entformt werden. Die Oberfläche ist sehr glatt und porenfrei ausgebildet; das Teil schrumpft nicht und weist in der Kernzone eine sehr gleichmäßige, feinzellige Schaumstruktur auf.

An Prüfplatten mit folgenden Abmessungen und Rohdichten werden die folgenden mechanischen Eigenschaften gemessen:

| | |
|---|---|
| Prüfplatte A: | 200 × 200 × 10 mm |
| Rohdichte | 300 g/l |
| Härte Shore A | 49 |
| Reißfestigkeit, DIN 53 571 (N/mm²) | 1,32 |
| Bruchdehnung, DIN 53 571 (%) | 160 |
| Weiterreißfestigkeit DIN 53 575 (N/mm) | 7,50 |
| | |
| Prüfplatte B: | 260 × 210 × 40 mm |
| Rohdichte | 150 g/l |
| Druckspannung DIN 53 577 (N/cm²) | |
| 20% Stauchung | 2,06 |
| 40% Stauchung | 3,08 |
| 60% Stauchung | 6,70 |

### Vergleichsbeispiel

#### Komponente A

100 Teile eines Polyester-polyols auf Basis Adipinsäure, Butandiol-1,4, Pentandiol-1,5 und Hexandiol-1,6 mit einer OH-Zahl von 56 und einer Viskosität von 650 mPas, gemessen bei 75°C

werden mit

| | |
|---|---|
| 13,86 | Teilen Äthylenglykol, |
| 1,22 | Teilen einer 33%igen Lösung von Diazabicyclooctan in Dipropylenglykol, |
| 0,41 | Teilen Silikonöl (Tegostab B 4822), |
| 13,59 | Teilen Trichlorfluormethan, |
| 3,4 | Teilen Trichlor-trifluor-äthan, |
| 3,4 | Teilen Ruß (Printex 60) |
| 0,007 | Teilen Dibutylzinndilaurat |

bis zur vollständigen Homogenisierung gemischt.

Komponente B entspricht der des Beispiels 9.

Die Komponenten A und B werden auf 23°C temperiert und im Gewichtsverhältnis 100 : 91 10 Sekunden lang intensiv vermischt und in eine auf 45°C erwärmte Aluminiumform gegossen.

Die Startzeit beträgt 18 Sekunden, die Steigzeit 45 Sekunden. Der frei aufschäumende Polyurethan-Schaumstoff besitzt eine Rohdichte von 80 g/l.

Das Formteil kann nach 5 Minuten entformt werden. Die Randzone weist eine leichte Orangenhautstruktur auf, das Formteil beginnt nach dem Abkühlen leicht zu schrumpfen und zeigt in der Kernzone eine relativ grobe, unregelmäßige Zellstruktur.

An gemäß Beispiel 9 hergestellten Prüfplatten wurden folgende mechanische Eigenschaften gemessen:

| | |
|---|---|
| Prüfplatte A: | |
| Härte Shore A, DIN 53 505 | 51 |
| Reißfestigkeit DIN 53 571 ($N/mm^2$), | 1,82 |
| Bruchdehnung DIN 53 571 (%) | 220 |
| Weiterreißfestigkeit DIN 53 575 (N/mm) | 8,00 |
| Prüfplatte B: | |
| Druckspannung, DIN 53 577 ($N/cm^2$) | |
| 20% Stauchung | 2,02 |
| 40% Stauchung | 2,80 |
| 60% Stauchung | 5,58 |

Ein Vergleich von Beispiel 9 mit dem Vergleichsbeispiel zeigt, daß der Füllstoffzusatz die Schaumstoffmorphologie verbessert, einen Schrumpf verhindert und bei stärkerer Stauchung (60%) eine deutliche Erhöhung der Druckspannung bewirkt.

**Patentansprüche**

1. Verfahren zur Herstellung von verstärkten, geschäumten Kunststoffen auf Basis von organischen Polyisocyanaten, Polyolen, feinteiligen Dispersionen von Füllstoffen, Katalysatoren, Treibmitteln und gegebenenfalls Kettenverlängerungsmitteln und Zusatzstoffen, dadurch gekennzeichnet, daß man feinteilige Dispersionen von Füllstoffen verwendet, die durch in situ Zerkleinerung mit örtlichen Energiedichten von 10 bis 3000 $kWh/m^3$ auf Teilchengrößen von kleiner als 7 µm und gleichzeitiger Dispergierung von organischen und/oder anorganischen Füllstoffen in Polyolen mit Molekulargewichten von 200 bis 8000 oder organischen Polyisocyanaten hergestellt werden.
2. Verfahren gemäß Anspruch 1, dadurch gekennzeichnet, daß die Teilchengröße 0,01 bis 7 µm beträgt.
3. Verfahren gemäß Anspruch 1, dadurch gekennzeichnet, daß als Füllstoffe anorganische Füllstoffe verwendet werden.
4. Verfahren gemäß Anspruch 3, dadurch gekennzeichnet, daß als anorganische Füllstoffe Silikate, Metalloxide, Metallsalze, anorganische Pigmente, Glas, Asbestmehl oder Mischungen der genannten Füllstoffe verwendet werden.
5. Verfahren gemäß Anspruch 1, dadurch gekennzeichnet, daß als organische Füllstoffe Kohle und organische Pigmente verwendet werden.
6. Verfahren gemäß Anspruch 1, dadurch gekennzeichnet, daß als Dispergiermedium Polyole verwendet werden.
7. Verfahren gemäß Anspruch 6, dadurch gekennzeichnet, daß als Polyole Polyesterole und/oder Polyätherole mit Hydroxylzahlen von 15 bis 800 verwendet werden.
8. Verfahren gemäß Anspruch 8, dadurch gekennzeichnet, daß als Polyole Polyätherole verwendet werden.

## Claims

1. A process for the manufacture of reinforced foamed plastics based on organic polyisocyanates, polyols, dispersions of finely divided fillers, catalysts, foaming agents and, if desired, chain extending agents and additives, wherein dispersions of finely divided fillers are used, which fillers are produced by in situ comminution with high local energy densities of from 10 to 3000 kWh/$m^3$ to particle sizes of less than 7 μm, and simultaneous dispersion of organic and/or inorganic fillers in polyols having molecular weights of from 200 to 8000, or organic polyisocyanates.

2. A process as claimed in claim 1, wherein the particle size is from 0.01 to 7 μm.

3. A process as claimed in claim 1, wherein inorganic fillers are used as filler materials.

4. A process as claimed in claim 3, wherein silicates, metallic oxides, metal salts, inorganic pigments, glass, asbestos powder or mixtures of the said filler materials are used as inorganic fillers.

5. A process as claimed in claim 1, wherein coal and organic pigments are used as organic fillers.

6. A process as claimed in claim 1, wherein polyols are used as dispersing medium.

7. A process as claimed in claim 6, wherein polyester polyols and/or polyether polyols having hydroxyl numbers of from 15 to 800 are employed as polyols.

8. A process as claimed in claim 7, wherein polyether polyols are employed as polyols.

## Revendications

1. Procédé pour la fabrication de matières plastiques expansées renforcées à base de polyisocyanates organiques, de polyols, de matières de charge finement dispersées, de catalyseurs, d'agents d'expansion et eventuellement d'agents d'allongement des chaînes et d'autres additifs, caractérisé en ce que l'on emploie des dispersions finement divisées de matères de charge, préparées par une réduction in situ, sous des densités d'énergie locales de 10 à 3000 kWh/$m^3$, à une granulométrie inférieure à 7 μm, et une dispersion concomitante de matières de charge organiques et (ou) inorganiques dans des polyols avec des poids moléculaires de 200 à 8000 ou des polyisocyanates organiques.

2. Procédé suivant la revendication 1, caractérisé en ce que la granulométrie est choisi entre 0,1 et 7 μm.

3. Procédé suivant la revendication 1, caractérisé en ce que les matières de charge utilisées sont des matières inorganiques.

4. Procédé suivant la revendication 3, caractérisé en ce que les matières de charge inorganiques sont choisies parmi les silicates, les oxydes de métaux, les sels de métaux, les pigments minéraux, le verre, l'amiante pulvérulente et des mélanges de ceux-di.

5. Procédé suivant la revendication 1, caractérisé en ce que l'on utilise des matières de charge organiques choisies parmi le charbon et les pigments organiques.

6. Procédé suivant la revendication 1, caractérisé en ce que l'on emploie des polyols comme milieu de dispersion.

7. Procédé suivant la revendication 6, caractérisé en ce que les polyols sont choisis parmi les poly-ester-ols et(ou) les poly-éther-ols avec des indices d'hydroxyle de 15 à 800.

8. Procédé suivant la revendication 7, caractérisé en ce que l'on emploie comme polyols des poly-éther-ols.